# EUROPEAN PATENT APPLICATION

(11) **EP 4 679 915 A1**
(43) Date of publication of application: **14.01.2026**
(21) Application number: 23926675.2
(22) Date of filing: 10.03.2023
(51) Int. Cl.: H04W 72/12

(54) **COMMUNICATION METHOD AND COMMUNICATION DEVICE**

(71) Applicant: Quectel Wireless Solutions Co., Ltd., Shanghai 201601 (CN)
(72) Inventor: ZHAO, Zheng, Shanghai 201601 (CN); LYU, Ling, Shanghai 201601 (CN); YANG, Zhongzhi, Shanghai 201601 (CN)
(74) Representative: Fish & Richardson P.C.
(86) International application number: PCT/CN2023/080870
(87) International publication number: WO 2024/187316

(57) **Abstract**

A method for communication and a communication device are provided. The method includes: a first communication device receiving first information sent by a second communication device, where the first information is used to indicate a first time, and the first time is a reference delivery time of a first data packet; and the first communication device receiving the first data packet. Based on the present disclosure, the second communication device that sends the first data packet may indicate the first time of the first data, i.e., the sender may indicate the latest delivery time of the first data. Based on this, the delivery time of the first data packet may consider the situation of the sender as well as the transmission process from the sender to the recipient, thereby enabling the first communication device to improve the delivery of the first data so as to achieve a better communication effect.

## Description

### TECHNICAL FIELD

The present disclosure relates to the field of communication technology, and more specifically to a method for communication and a communication device.

### BACKGROUND

After receiving a data packet, a recipient delivers the data packet to an upper layer or other devices. In related technologies, there may be instances where the delivery occurs later than expected, which can result in a poor communication experience. For example, if the data packet is delivered to an application layer of a terminal device too late, the data packet will be presented late to the user, resulting in a poor user experience.

### SUMMARY

The present disclosure provides a method for communication and a communication device. Various aspects related to the present disclosure are described below.

According to a first aspect, a method for communication is provided, including: receiving, by a first communication device, first information sent by a second communication device, where the first information is used to indicate a first time, and the first time is a reference delivery time of a first data packet; and receiving, by the first communication device, the first data packet.

According to a second aspect, a method for communication is provided, including: sending, by a second communication device, first information to a first communication device, where the first information is used to indicate a first time, and the first time is a reference delivery time of a first data packet; and sending, by the second communication device, the first data packet.

According to a third aspect, a communication device is provided, where the communication device is a first communication device, and the communication device includes: a first receiving unit, configured to receive first information sent by a second communication device, where the first information is used to indicate a first time, and the first time is a reference delivery time of the first data packet; and a second receiving unit, configured to receive the first data packet.

According to a fourth aspect, a communication device is provided, where the communication device is a second communication device, and the communication device includes: a first sending unit, configured to send first information to a first communication device, where the first information is used to indicate a first time, and the first time is a reference delivery time of the first data packet; and a second sending unit, configured to send the first data packet.

According to a fifth aspect, a communication device is provided, including a processor and a memory, where the memory is configured to store one or more computer programs, and the processor is configured to invoke the one or more computer program in the memory to cause a terminal device to perform part or all of operations in the method in the first aspect and/or the second aspect.

According to a sixth aspect, an embodiment of the present disclosure provides a communication system, where the communication system includes the above communication device. In another possible design, the communication system may further include another device that interacts with the communication device in the solution provided in the embodiments of the present disclosure.

According to a seventh aspect, an embodiment of the present disclosure provides a computer-readable storage medium, storing a computer program, where the computer program causes a communication device to perform part or all of the operations in the methods in the foregoing aspects.

According to an eighth aspect, an embodiment of the present disclosure provides a computer program product, where the computer program product includes a non-transitory computer-readable storage medium storing a computer program, and the computer program is operable to cause a communication device to perform part or all of the operations in the methods in the foregoing aspects. In some implementations, the computer program product may be a software installation package.

According to a ninth aspect, an embodiment of the present disclosure provides a chip, where the chip includes a memory and a processor, and the processor invokes the computer program from the memory and runs the computer program, to implement part or all of the operations described in the methods in the foregoing aspects.

Based on the present disclosure, the second communication device that sends the first data packet may indicate the reference delivery time of the first data. The reference delivery time may be the latest delivery time, meaning the sender may indicate the latest delivery time of the first data. Based on the first information, the delivery time of the first data packet set may consider the situation of the sender as well as the transmission process from the sender to the recipient, thereby enabling the first communication device to improve the delivery of the first data packet set so as to achieve a better communication effect.

### BRIEF DESCRIPTION OF THE DRAWINGS

FIG. 1 is a schematic diagram of a wireless communication system applied in an embodiment of the present disclosure.
FIG. 2 is an example diagram of merging transmission of video data and audio data.
FIG. 3A is an example diagram of transmitting video data and haptic data in a merging manner.
FIG. 3B is an example diagram of transmitting video data and haptic data in a non-merging manner.
FIG. 3C is an example diagram of a time axis corresponding to FIG. 3B.
FIG. 4 is a schematic flowchart of a method for communication according to an embodiment of the present disclosure.
FIG. 5 is another schematic flowchart of a method for communication according to an embodiment of the present disclosure.
FIG. 6 is another schematic flowchart of a method for communication according to an embodiment of the present disclosure.
FIG. 7 is a schematic structural diagram of a communication device according to an embodiment of the present disclosure.
FIG. 8 is a schematic structural diagram of a communication device according to an embodiment of the present disclosure.
FIG. 9 is a schematic structural diagram of an apparatus for communication according to an embodiment of the present disclosure.

### DETAILED DESCRIPTION OF THE EMBODIMENTS

The technical solutions in the present disclosure will be described below with reference to the accompanying drawings.

### COMMUNICATION SYSTEM

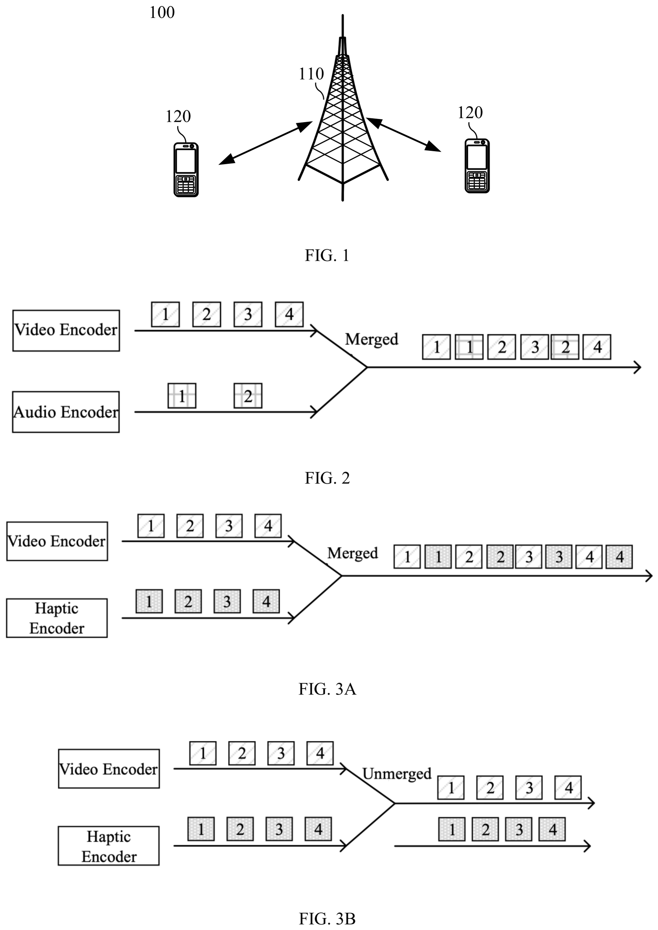

FIG. 1 is a wireless communication system 100 applied in embodiments of the present disclosure. The wireless communication system 100 includes communication devices. The communication devices include a network device 110 and a terminal device 120, and the network device 110 may be a device that communicates with the terminal device 120. The network device 110 provides communication coverage for a particular geographic area and communicates with the terminal device 120 located within the coverage area.

FIG. 1 exemplarily shows a network device and two terminals. Optionally, the wireless communication system 100 may include a plurality of network devices, and the coverage of each network device may include other numbers of terminals, which is not limited in the embodiments of the present disclosure.

Optionally, the wireless communication system 100 may further include another network entity such as a network controller, a mobility management entity, etc., which is not limited in the embodiments of the present disclosure.

It should be understood that the technical solutions in the embodiments of the present disclosure may be applied to various communication systems, for example, a 5^{th} generation (5G) or new radio (NR) system, a long term evolution (LTE) system, an LTE frequency division duplex (FDD) system, an LTE time division duplex (TDD) system, and the like. The technical solutions provided in the present disclosure may further be applied to a future communication system such as a sixth-generation mobile communication system, a satellite communication system, or the like.

The terminal device in the embodiments of the present disclosure may also be referred to as user equipment (UE), an access terminal, a subscriber unit, a subscriber station, a mobile station (MS), a mobile terminal (MT), a remote station, a remote terminal, a mobile device, a user terminal, a terminal, a wireless communication device, a user agent, or a user equipment. The terminal device in the embodiments of the present disclosure may be a device that provides voice and/or data connectivity to a user, and may be used to connect a person, an object, and a machine, for example, a handheld device or a vehicle-mounted device having a wireless connection function. The terminal device in the embodiments of the present disclosure may be a mobile phone, a pad, a notebook computer, a palmtop computer, a mobile internet device (MID), a wearable device, a virtual reality (VR) device, an augmented reality (AR) device, a wireless terminal in industrial control, a wireless terminal in self-driving, a wireless terminal in a remote medical surgery, a wireless terminal in a smart grid, a wireless terminal in transportation safety, a wireless terminal in a smart city, a wireless terminal in smart home, etc. Optionally, the UE may serve as a base station. For example, the UE may serve as a scheduling entity that provides a sidelink signal between UEs in vehicle-to-everything (V2X), device-to-device (D2D), or the like. For example, cellular phones and automobiles communicate with each other using sidelink signals. The cellular phone communicates with the smart home device without relaying communication signals through the base station.

The network device in the embodiments of the present disclosure may be a device configured to communicate with the terminal, and the network device may also be referred to as an access network device or a radio access network device, e.g., the network device may be a base station. The network device in the embodiments of the present disclosure may refer to a radio access network (RAN) node (or device) that accesses the terminal device to a wireless network. The base station may broadly cover various names in the following or be replaced with the following names. For example, a node B (NodeB), an evolved NodeB (eNB), a next generation NodeB (gNB), a relay station, an access point, a transmitting and receiving point (TRP), a transmitting point (TP), a master station (MeNB), a secondary station (SeNB), a multi-standard radio (MSR) node, a femtocell, a network controller, an access node, a wireless node, an access point (AP), a transmission node, a transceiver node, a base band unit (BBU), a remote radio unit (RRU), an active antenna unit (AAU), a remote radio unit (RRH), a central unit (CU), a distributed unit (DU), a positioning node, and the like. The base station may be a macro base station, a micro base station, a relay node, a donor node or the like, or a combination thereof. The base station may also refer to a communication module, a modem, or a chip for being disposed in the foregoing device or apparatus. The base station may also be a mobile switching center and a device that plays a role of the base station in the D2D, V2X, and machine-to-machine (M2M) communication, a network side device in a 6G network, and a device that plays a role of the base station in a future communication system, etc. The base station supports networks of the same or different access technologies. The specific technology adopted by the network device and a specific form of the device in the embodiments of the present disclosure are not limited in the embodiments of the present disclosure.

The base station may be fixed or mobile. For example, a helicopter or drone may be configured to serve as a mobile base station, and one or more cells move according to the position of the mobile base station. In other examples, a helicopter or drone may be configured to serve as a device in communication with another base station.

In some deployments, the network device in the embodiments of the present disclosure may refer to the CU or the DU, or the network device includes the CU and the DU. The gNB may also include the AAU.

The network device and the terminal device may be deployed on land, including indoor or outdoor, handheld or vehicle-mounted, may be deployed on a water surface, and may also be deployed on an aircraft, a balloon, and a satellite in the air. A scenario in which the network device and the terminal device are located is not limited in the embodiments of the present disclosure.

It should be understood that all or part of functions of the communication device in the present disclosure may also be implemented by a software function running on hardware or implemented by a virtualization function instantiated on a platform (e.g., a cloud platform).

### EXTENDED REALITY

Extended reality (XR) can be implemented using computer technology and wearable devices. XR may include representative forms such as augmented reality (AR), mixed reality (MR), and virtual reality (VR). VR technology simulates real-world objects and backgrounds using computers and presents these simulated virtual objects and backgrounds to the user. AR technology provides virtual objects on real-world imagery. MR technology combines the real world with virtual reality to provide an environment where real physical objects and virtual objects interact.

From the above introduction to XR, it is clear that XR requires high transmission rates to achieve a good user experience. With the development of wireless cellular communication technologies, wireless communication systems (such as 5G systems) are achieving increasingly higher frequency efficiency, wider usable bandwidth, and higher data transmission rates. Therefore, using wireless communication technology to support XR services is becoming increasingly feasible.

The development of XR and wireless communication networks (such as 5G networks) can mutually promote each other in a positive feedback loop. On the one hand, the development of wireless communication networks can support the development of XR. For example, a user's XR service requires a transmission rate of 30 to 200Mbps, and a cell needs to support at least 10 terminal devices simultaneously conducting XR services. With the development of communication technology, some networks (5G networks) can provide greater transmission capacity to support the above situation. On the other hand, XR technology can also promote the development of communication services. For example, when the transmission capacity provided by the network increases significantly, mainstream services increasingly struggle to fill the network capacity, leading to idle network transmission capability. Therefore, objectively, these networks with large capacity also need new services like XR to fully utilize the network, thereby promoting their rapid growth and strengthening.

### MERGING TRANSMISSION OF DIFFERENT TYPES OF DATA

There may be a certain time relationship between different types of data. For example, XR service data may include multiple types, such as video data, audio data, and haptic data. Different types of data have different requirements for transmission. Therefore, different types of data may be mapped into corresponding data streams and transmitted over a wireless network.

To achieve immersive service experience, there may be a certain time relationship between different types of data. For example, video data and audio data must be presented to a recipient user at the same time. Alternatively, the haptic data and the video data must be presented to the user at the same time.

Considering the time relationship between different types of data, the different types of data may be merged and transmitted. For example, for two types of data with the same or similar latency and error rate requirements, the sender may merge data packets encoded by the two types of data for transmission. Merging transmission may be, for example, arranging the two types of data packets into one queue. Since the transmission network provides the ordered transmission of the service data packets, the merging transmission can ensure that the two types of data packets are synchronously presented to the recipient.

FIG. 2 is an example diagram of merging transmission of video data and audio data. The two types of video and audio data have the same latency and error rate requirements, and therefore, the two types of data are merged and transmitted. As shown in FIG. 2, a video encoder outputs a video data packet 1 to a video data packet 4, and an audio encoder outputs an audio data packet 1 and an audio data packet 2. The sender merges the video data packet 1 to the video data packet 4, the audio data packet 1, and the audio data packet 2. The merged data packets as shown in FIG. 2 are arranged in a queue. The sender sends the queue formed after merging to the recipient.

### MULTI-MODALITY SERVICE

For some data, the required latencies and error rates may be different. For example, the latency and error rate required for haptic data are greatly different from those of the audio and video data. To satisfy the time relationship between these data, some communication systems have certain limitations on the delivery time of the data of the recipient. The limitation includes that a time difference between delivery times of different types of data packets cannot be greater than a certain threshold. For example, a time difference between delivering haptic data and video or audio data packets to the user cannot be greater than the threshold. It should be understood that the data that needs to satisfy the foregoing limitations are bundled together. Such data bundled together may be referred to as a set of "multi-modality services". Alternatively, there may be a multi-modality relationship between these data.

It should be noted that, after receiving the data, the recipient may deliver the received data to an upper layer or a user plane function (UPF). For example, when the recipient is a terminal device, the terminal device may deliver the data to the upper layer (such as an application layer), that is, the delivery time may refer to a time at which the terminal device delivers the data to the upper layer. Alternatively, when the recipient is an access network device, the access network device may deliver the data to the UPF, that is, the delivery time may refer to a time at which the access network device delivers data to the UPF. Alternatively, when the recipient is the UPF, the delivery time may refer to a time at which the UPF delivers data to an upper data network (DN).

In some embodiments, multi-modality services may be transmitted in the foregoing merging manner or a non-merging manner, although both manners have drawbacks. For example, merging transmission may impose additional transmission costs on the wireless network. Alternatively, non-merging transmission may result in a time difference between delivery times of different types of packets exceeding the threshold. The following describes examples with reference to FIG. 3A and FIG. 3B.

In FIG. 3A or FIG. 3B, the video data packet 1 is generated at a time T1 and starts to be transmitted and is required to be presented to the user before a time T2. That is, the maximum transmission latency that the user can tolerate is (T2-T1). A haptic data packet 1 is also generated at the time T1 and starts to be transmitted and is required to be presented to the user before a time T3. That is, the maximum transmission latency that the user can tolerate is (T3-T1).

FIG. 3A is an example diagram of transmission in a merging manner. As shown in FIG. 3A, the sender may merge the video data and the haptic data into a queue. In the queue, the data packets may be arranged according to the generation time. For example, the video data packet 1 is arranged before the haptic data packet 1, so the video data packet 1 must be transmitted to the recipient before the haptic data packet 1, and the haptic data packet 1 must be transmitted to the recipient before the time T3. Therefore, the video data packet 1 must also be transmitted to the recipient before the time T3. If the time T2 is later than the time T3, the transmission latency of the video data packet 1 is shortened, which means improving the requirements for the wireless network, thereby improving the transmission cost.

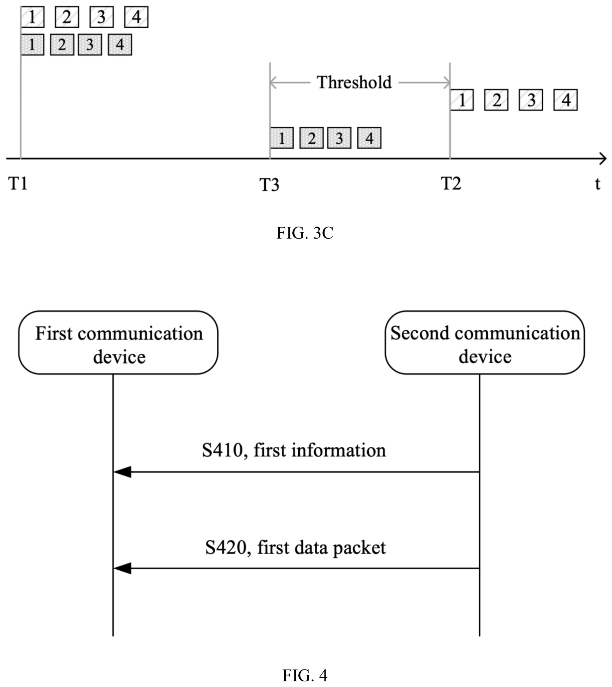

FIG. 3B is an example diagram of transmission in a non-merging manner. As shown in FIG. 3B, the sender may transmit the haptic data and the video data as two queues respectively. In this case, the wireless network may consider the data of the two queues to be completely independent. FIG. 3C is an example diagram of a time axis corresponding to FIG. 3B. In FIG. 3C, the wireless network may consider that the user requirements are met as long as the video data is transmitted to the recipient before the time T2 and the haptic data is transmitted to the recipient before the time T3. However, the difference between the delivery times of the two types of data may exceed the required threshold. For example, the wireless network has transmitted the haptic data to the recipient some time before the time T3 and the video data to the recipient merely at the time T2. If the two queues are independently transmitted, the recipient may deliver the haptic data some time before the time T3 and deliver the video data at the time T2, resulting in the difference between the delivery times of the two types of data exceeding the threshold.

### PROTOCOL DATA UNIT SET (PDU SET)

A group of closely related packets may be represented as a data packet set. Taking the above XR as an example, a plurality of data packets in the video data queue may form a data packet set, and a plurality of data packets in the haptic data queue may form another data packet set. The data packet set may be represented using the PDU set. Although the PDU set is a newly introduced concept of service data including XR, the PDU set may also be applied to other fields.

The recipient needs to deliver a plurality of data packets of a data packet set together. For example, the terminal device needs to deliver one data packet set as a whole to the upper layer. Alternatively, the access network device needs to deliver one data packet set as a whole to the UPF.

If a data packet is not received, the recipient may wait, but the waiting time may not be too long. Taking the data packets in the data packet set as an example, in the related technologies, the terminal device may deliver the PDU set to the upper layer once it is received. If a data packet in the PDU set is not received, the recipient may wait for a period of time, and the recipient no longer waits when the waiting time expires and delivers the received PDU set to the upper layer. For example, in a process in which the terminal device receives the PDU set, if it is found that a certain data packet is not received, a reordering timer may be started. In a case that the reordering timer does not expire, the terminal device may temporarily not deliver the PDU set to the upper layer and wait for an unreceived data packet. In a case that the reordering timer expires, the terminal device no longer waits, and delivers the PDU set to the upper layer.

It is learned from the above that in the related technologies, the delivery time of the data packet is determined based on the recipient's receiving situation of the data packet set, without considering an actual transmission situation of the data packet or user requirements, which leads to excessively late delivery times. In cases of late delivery, the delivery time may exceed the user's tolerance threshold, resulting in a poor user experience.

FIG. 4 is a schematic flowchart of a method for communication according to an embodiment of the present disclosure, to resolve the foregoing problems.

The method shown in FIG. 4 may be performed by a first communication device and a second communication device. The first communication device may be a terminal device or a network device, and the second communication device may be a terminal device or a network device. The network device may be one or more of an access network device, a UPF, and a server. For example, the first communication device and the second communication device may be a first terminal device and a second terminal device, respectively. The first terminal device and the second terminal device may communicate with each other via a sidelink.

The method shown in FIG. 4 includes operation S410 and operation S420.

At operation S410, the first communication device receives first information. Correspondingly, the second communication device sends the first information.

The first information may be used to indicate the first time. For example, the first information may include a first time. In other words, the first information may directly indicate the first time. Alternatively, the first information may be related to the first time. In other words, the first information may indirectly indicate the first time. That is, the first communication device may determine the first time using the first information.

The first time may be related to a delivery time of a first data packet. The delivery time may be a time at which the first data packet is delivered to an upper layer or other communication devices. In a case that the first communication device is a terminal device, the delivery time may be a time at which an access layer of the terminal device delivers the first data packet to an application layer, an IP layer, a TCP/UDP layer, or an Ethernet protocol layer of the terminal device. Alternatively, in a case that the first communication device is the terminal device, the terminal device may deliver the first data packet to another device that is connected to the terminal device via a wired or wireless connection, e.g., deliver to a wearable device such as an XR helmet. In this case, the delivery time may be a time at which the terminal device delivers the first data packet to another device. In a case that the first communication device is an access network device, the delivery time may be a time at which the access network device delivers a first data packet set to a UPF or a server. In a case that the first communication device is a UPF, the delivery time may be a time at which the UPF delivers data to the DN.

As an implementation, the first time may be a reference delivery time of the first data packet. The reference delivery time may be a latest time or a recommended time at which the first communication device delivers the first data packet. Alternatively, the reference delivery time may be an end time of a time interval for delivering the first data packet. It should be understood that the reference delivery time is a limitation or requirement on an actual delivery time. At the reference delivery time or before the reference delivery time, if the first communication device has delivered the first data packet, the delivery time of the first data packet meets the communication requirement. Alternatively, the first communication device needs to deliver the first data packet at the reference delivery time or before the reference delivery time as much as possible to meet the communication requirement or ensure the user experience.

At operation S420, the first communication device receives the first data packet. Correspondingly, the second communication device sends the first data packet. In other words, the first communication device is a recipient of the first data packet, and the second communication device is a sender of the first data packet.

It should be noted that the present disclosure does not limit an execution order of operation S410 and operation S420. The operation S410 may be executed earlier or later than the operation S420. Alternatively, the operation S410 may be executed in the process of executing the operation S420.

Based on the present disclosure, the second communication device that sends the first data packet may indicate a first time of first data, that is, the sender may indicate the reference delivery time of the first data. Based on this, the delivery time of the first data packet may consider the situation of the sender, and the transmission process from the sender to the recipient may also be considered, so that the first communication device may improve the delivery of the first data packet, thereby achieving a better communication effect. It should be noted that the first data packet may belong to a first data packet set. The first data packet set may include one or more associated data packets. For example, the first data packet may be a PDU. The first data packet set may include one or more associated PDUs. That is, the first data packet set may be a PDU set. Accordingly, the first data packet set may be a first PDU set.

In some embodiments, the first time may be a reference delivery time of the first data packet set. That is, the first information may be used to uniformly indicate a reference delivery time of one or more data packets in the first data packet set.

In some embodiments, for each data packet, corresponding first information may be sent. In other words, one piece of first information may correspond to a reference delivery time of one data packet. For a plurality of data packets, a plurality of pieces of corresponding first information may be indicated. In addition, for each data packet set, corresponding first information may be sent. That is, one piece of first information may correspond to a reference delivery time of one data packet set. The plurality of pieces of first information may be in one-to-one correspondence with the plurality of data packet sets. In the foregoing case, the first information may be provided along with user plane data each time.

In some other embodiments, for a plurality of data packets, first information may be provided once. In other words, the first information may be used to indicate a reference delivery time of the plurality of data packets, and the plurality of data packets may include the first data packet set. Alternatively, for a plurality of data packet sets, first information may be provided once. In other words, the first information may be used to indicate a reference delivery time of the plurality of data packet sets, and the plurality of data packet sets may include the first data packet set. In some implementations, respective reference delivery times of the plurality of data packets may be calculated according to a time indicated by the first information. Respective reference delivery times of the plurality of data packet sets may be calculated according to a time indicated by the first information. The following uses the data packet set as an example for description, and it should be understood that the data packet may be implemented in a similar manner. The reference delivery time of the first data packet set may be obtained according to the time indicated by the first information, and reference delivery times of subsequent data packet sets may be sequentially determined recursively advancing one cycle. The cycle may be configured by the network device. Alternatively, for the video data, the cycle may depend only on a frame rate because the video data is sent in a set of data packets in cycles. The frame rate may be, for example, 60 frames per second.

The present disclosure does not limit the method in which the second communication device determines the first time. In some embodiments, in a case that the first communication device is a terminal device and the second communication device is an access network device, the first time may be determined based on one or more of a packet delay budget (PDB), a second time, and a first duration of a traffic flow corresponding to the first data packet.

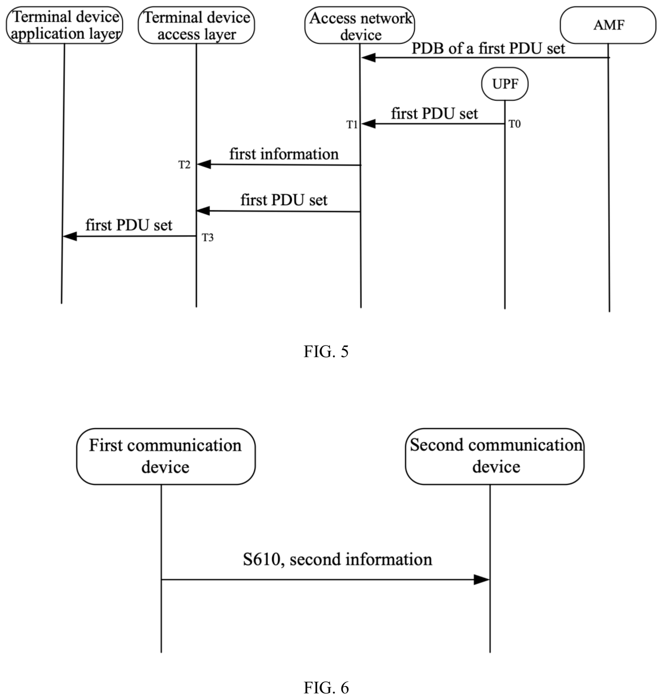

The second time may be a time at which the access network device receives the first data packet from the UPF. In a case that the first data packet belongs to the first data packet set, if the first data packet set includes a plurality of data packets, the second time may be a time at which the access network device receives a last data packet in the first data packet set from the UPF, or the second time may be a time at which the access network device receives the first data packet in the first data packet set from the UPF. With reference to FIG. 5, a case that the first data packet belongs to the first data packet set and the first data packet set is the first PDU set is described. As shown in FIG. 5, the UPF receives downlink data at a time T₀. If the downlink data includes the first PDU set, T₀ may indicate a time at which the UPF receives a last PDU in the first PDU set. The access network device receives the first PDU set from the UPF at the second time T₁.

A PDB of a traffic flow corresponding to the first data packet set may be used to indicate a maximum latency between the UPF and the terminal device. As shown in FIG. 5, the access layer of the terminal device receives the first PDU set at the time T₂. That is, a duration corresponding to the PDB may be a maximum duration between T₀ and T₂. The access network device may obtain the PDB of the traffic flow through a control plane message. There may be a PDU set relationship between data packets corresponding to the traffic flow. The control plane message may be a message sent by a core access and mobility management function (AMF). In other words, the access network device may obtain the PDB of the traffic flow corresponding to the first data packet set from the AMF.

The first duration may be a duration required for transmitting the first data packet from the UPF to the access network device. The access network device may assume that the first duration required for transmitting the first data packet from the UPF to the access network device is a fixed value. As shown in FIG. 5, the first duration may be a duration between T₀ and T₁. The first duration may be determined based on one or both of an OAM and a communication protocol.

In some embodiments, the first time may be determined based on the following formula: T₁+(T_{PDB}-N3_fix). T1 represents a second time, T_{PDB} represents a duration corresponding to the PDB of the traffic flow corresponding to the first data packet, and N3_fix represents the first duration. The first time is represented by T₃ in FIG. 5. It is learned from FIG. 5 that T₃ may be determined based on Ti and a maximum transmission duration between the access network device and the terminal device. It should be understood that a transmission duration between the access network device and the terminal device may be determined through a maximum transmission latency (i.e., a PDB) from the UPF to the terminal device and a transmission duration (i.e., the first duration N3_fix) between the UPF and the access network device, i.e., (T_{PDB}-N3_fix). Therefore, the first time is determined by T₁+(T_{PDB}-N3_fix).

It is noted above that the first information may directly indicate the first time or may indirectly indicate the first time. In a case that the first information directly indicates the first time, the present disclosure does not limit a representation of the first time. For example, the first time may be represented by an identifier of a time unit and/or an absolute time. The absolute time may be represented by one or more of year, month, day, time, minute, second, millisecond, microsecond. For example, the first time may be expressed as February 2, 2023, 16:58:34.304.

The time unit may include one or more of a radio frame, a subframe, a slot, and an orthogonal frequency division multiplexing (OFDM) symbol. The identifier of the time unit may be, for example, a number, an ID, or etc. of the time unit. That is, the first time may be represented by one or more of a radio frame number, a subframe number, a slot number, and an OFDM symbol. In some implementations, the first time may be the earliest of times that occur after a receiving time of the first information and conform to the time unit indicated by the first information.

In a case that the first information indirectly indicates the first time, the first information may be represented by the second duration. The second duration may be used to indicate a duration between the receiving time of the first information and the first time. The first communication device may determine the first time based on the second duration and/or the receiving time of the first information.

Continuing to take FIG. 3 as an example, the access layer of the terminal device may receive the first information at the time T₂, the first time may be represented by T₃, and the second duration may be represented as (T₃-T₂). After receiving the first information, the terminal device may calculate the first time T₃ based on the receiving time T₂ of the first information and the second duration (T₃-T₂) included in the first information.

The second communication device may estimate a time at which the first information arrives at the first communication device. For example, the second communication device may estimate the time at which the first data packet arrives at the first communication device when scheduling the data packet, so as to estimate the time at which the first information arrives at the first communication device and then determine the second duration. In a case of a plurality of data packets in the first data packet set, it is considered that there may be a difference between scheduling times of different data packets or receiving times of the first communication device, the second communication device may indicate corresponding second durations for different data packets, i.e., the first information may include one or more second durations. As an implementation, the second communication device may group a plurality of data packets in the first data packet set. The scheduling times or receiving times of data packets in the same group are close to each other. The second communication device may determine a corresponding second duration for one or more groups. The first information may include the second duration corresponding to one or more groups. After receiving the data packet in the first data packet set, the first communication device may determine the first time based on the corresponding second duration.

In some embodiments, the first information may be carried in one or more of downlink control information (DCI), a medium access control control element (MAC CE), a control data packet, and a MAC header. The control data packet may include, for example, a radio link control (RLC) control PDU and/or a packet data convergence protocol (PDCP) control PDU. The message carrying the first information may be determined based on an indication form of the first information. For example, in a case that the first information directly indicates the first time, the first information may be carried in the control data packet. In a case that the first information indicates the second duration, the first information may be carried in one or more of the DCI, the MAC CE, and the MAC header.

It should be noted that the present disclosure does not limit a location the data packet or the message carrying the first information. When the first information is carried in the control PDU, the control PDU may be inserted between any two PDUs, or the control PDU may be inserted before the first PDU, or the control PDU may be inserted after the last PDU. In other words, the control PDU may be the first PDU of the first data packet set, the last PDU of the first data packet set, or any PDU in the first data packet set. When the first information is carried in the MAC header, the MAC header corresponding to any MAC SDU may be used to transmit the first information.

In some implementations, the first data packet may be transmitted through a plurality of transport blocks (TB). The first information may be included in all of the plurality of TBs. That is, the first information may be included in each of the plurality of TBs. The first information may be included in part of the plurality of TBs. For example, the first information may be included in a first TB and/or a last TB where the first data packet is located.

It should be understood that, when the first information is included in all of the plurality of TBs, the first communication device may obtain the first information by parsing any one of the TBs. When the first information is included in part of the plurality of TBs, additional indication information is required to indicate the TB where the first information is included.

After receiving the first information, the first communication device may perform the delivery according to the first time. As an implementation, the first communication device may deliver the first data packet at the first time or before the first time.

For a case that the first data packet belongs to the first data packet set, the present disclosure also proposes a technical solution for how to deliver the first data packet set.

In some implementations, the first communication device may deliver the first data packet set at the first time or before the first time.

In some implementations, the first communication device may deliver the first data packet set at the first time or before the first time in response to the first communication device receiving all data packets in the first data packet set. In other words, when the first communication device receives all data in the first data packet set, the first communication device may immediately deliver the first data packet set.

In some implementations, the first communication device may deliver the first data packet set at the first time regardless of whether the first communication device receives all data packets in the first data packet set.

In some implementations, the first communication device may deliver the first data packet set at the first time if the first communication device receives all data in the first data packet set. At the first time, the first communication device may discard part or all of the data in the first data packet set if the first communication device does not receive all the data in the first data packet set.

In some implementations, in a case that a first condition is met, the first communication device may deliver the first data packet set. In a case that the first condition is not met, the first communication device may wait for a period of time for the first condition to be met. For example, the first communication device waits for the first condition to be met before the first time. If the first condition is still not met, part or all of the data packets in the first data packet set may be discarded, or part or all of the received data packets in the first data packet set may be delivered.

It should be noted that the foregoing implementations may be implemented in combination. For example, at the first time or before the first time, the first communication device may determine whether the first condition is met if the first communication device receives all the data packets in the first data packet set. If the first condition is met, the first communication device may deliver the first data packet set. Alternatively, at the first time or before the first time, the first communication device may deliver the first data packet set if the first condition is met, regardless of whether the first communication device receives all data packets in the first data packet set.

The first condition may include existing conditions for delivering the first data packet set in the related technology. For example, the first condition may include: in a case that the first data packet set is not completely received, for which types of services the first communication device can perform the delivery of the first data packet set.

In addition, the first condition provided in the present disclosure may include one or more of: a previous data packet set of the first data packet set having been delivered; a time at which the first data packet set is delivered being later than a fourth time, where the fourth time is later than or equal to a reference delivery time of the previous data packet set; and a data packet set corresponding to a first traffic flow having been delivered, where the first traffic flow has a multi-modality relationship with a traffic flow corresponding to the first data packet set. The fourth time may be the reference delivery time of the previous data packet set. Alternatively, the fourth time may be the reference delivery time plus an offset duration of the previous data packet set.

As an implementation, whether to deliver the first data packet set and at which time to deliver the first data packet set may be determined based on a delivery situation of the previous data packet set of the first data packet set. For example, at the first time or before the first time, the first communication device may deliver the first data packet set if the first communication device has received all data in the first data packet set, and the latest delivery time of the previous data packet set of the first data packet set has been exceeded or the previous data packet set has been delivered.

As an implementation, in a case that the traffic flow corresponding to the first data packet set has a multi-modality relationship with the first traffic flow, whether to deliver the first data packet set and at which time to deliver the first data packet set may be determined according to a delivery situation of a data packet set corresponding to the first traffic flow. For example, at the first time or before the first time, the first communication device may deliver the first data packet set if the first communication device has received all data in the first data packet set and the data packet set corresponding to the first traffic flow has been delivered.

After the first communication device receives the first data packet, the present disclosure proposes that the first communication device may feed back an actual delivery situation of the first data packet to the second communication device.

FIG. 6 is a schematic flowchart of a method for communication according to an embodiment of the present disclosure. The method shown in FIG. 6 includes operation S610.

At operation S610, the first communication device triggers second information.

Triggering the second information may be understood as triggering transmission of the second information. In a case that the second information is triggered, the second information needs to be sent. In actual cases, the second information may be sent or may not be sent. Whether the second information can be sent may depend on some conditions. That is, operation S610 may include the first communication device sending the second information. Correspondingly, the second communication device may receive the second information.

The second information may be used to indicate the actual delivery situation of the first data packet. If the traffic flow corresponding to the first data packet has a multi-modality relationship with the first traffic flow, the second communication device may adjust a transmission policy of a second data packet corresponding to the first traffic flow according to the actual delivery situation of the first data packet, so that the transmission of the second data packet may satisfy a restriction condition of the multi-modality relationship.

It should be noted that the method shown in FIG. 6 may be implemented in combination with the method shown in FIG. 4 or may be implemented separately. For example, the first communication device may receive the first information, determine how to deliver the first data packet based on the first information, and further transmit the second information. Alternatively, the first communication device may further determine, based on the related technology, how to deliver the first data packet, and transmit the second information.

In some embodiments, the second information may be used to explicitly or implicitly indicate one or more of: an actual delivery time of the first data packet, whether the first data packet has been delivered, and a time difference between the actual delivery time of the first data packet and the first time. Similar to the first time, the actual delivery time of the first data packet may be represented by an identifier of the time unit and/or an absolute time.

In some embodiments, whether the first communication device is able to trigger the second information is determined based on the actual delivery time. For example, if the actual delivery time is within a first time period, the first communication device is able to trigger the second information; and/or, if the actual delivery time is within a second time period, the first communication device is unable to trigger the second information.

If the first communication device sends the second information to assist the second communication device in improving subsequent transmission, the second information may be transmitted. If the sender cannot be assisted to improve subsequent transmission, the second information may not be transmitted. For example, if the second information is transmitted during the second time period, the second communication device may have not already been able to improve the subsequent transmission. Therefore, in the second time period, the second information may not be transmitted.

In the present disclosure, a start time and an end time of the first time period or the second time period are not limited.

In some embodiments, the start time of the first time period may be any time before the first time, or the start time of the first time period may be a time corresponding to a third duration before the first time. In some embodiments, the end time of the first time period may be any time before the first time, or the end time of the first time period may be the first time. In some embodiments, the start time and the end time of the first time period may coincide. For example, the start time and the end time of the first time period may both be the first time, i.e., the first time period may include only the first time.

In some embodiments, the start time of the second time period may be any time before the first time, or the start time of the second time period may be a time corresponding to the third duration before the first time. In some embodiments, the end time of the second time period may be any time before the first time, or the end time of the second time period may be the first time. In some embodiments, the start time and the end time of the second time period may coincide. For example, the start time and the end time of the second time period may both be the first time, i.e., the second time period may include only the first time.

The first time period and the second time period are illustrated below respectively.

In some embodiments, the first time period may include any time earlier than the first time, or a time period that reaches a threshold earlier than the first time. That is, as long as the first data packet is delivered before the first time, the first communication device is able to transmit the second information. In some embodiments, the start time of the first time period may be a certain time earlier than the first time. For example, the first time period may be [T₃-threshold1, T₃], where T₃ represents the first time and threshold1 represents the third duration.

In some embodiments, the second time period may include the first time. As an implementation, the second time period may be the first time. In other words, if the first communication device delivers the first data packet at the reference delivery time, the first communication device may not transmit the second information.

In some embodiments, the second time period may be a time period other than the first time period. Alternatively, the first time period may be a time period other than the second time period. For example, if the first communication device delivers the first data packet within the first time period, the first communication device may transmit the second information; and/or, if the first communication device delivers the first data packet at a time other than the first time period, the first communication device may not transmit the second information. Alternatively, if the first communication device delivers the first data packet within the second time period, the first communication device may not transmit the second information; and/or, if the first communication device delivers the first data packet at a time other than the second time period, the first communication device may transmit the second information.

In some embodiments, the first communication device may receive third information. Correspondingly, the second communication device may send the third information. The third information may be used to indicate whether the first communication device needs to transmit the second information. The first communication device is able to transmit the second information in a case that the third information indicates that the first communication device is able to transmit the second information. The first communication device may be unable to transmit the second information in a case that the third information indicates that the first communication device is unable to transmit the second information.

In some implementations, the third information may be dynamically indicated by the second communication device. In some implementations, the third information may be carried in the same message as the first information. That is, the third information may be indicated by the second communication device to the first communication device together with the reference delivery time described above.

In some embodiments, whether the first communication device is able to send the second information to the second communication device may be determined based on whether the first communication device is able to obtain a transmission resource. For example, when the first communication device obtains the transmission resource, the first communication device may send the second information on the obtained transmission resource. If the transmission resource is not obtained, the first communication device may wait for obtaining the transmission resource and transmit the second information after the transmission resource is obtained. If a condition for sending the second information is not met in the process of waiting for obtaining the transmission resource, the first communication device may cancel the sending of the second information.

When the first communication device is the terminal device and the second communication device is the access network device, the transmission resource for transmitting the second information may be an uplink transmission resource. When the first communication device is the access network device and the second communication device is the terminal device, the transmission resource for transmitting the second information may be a downlink transmission resource. Correspondingly, the transmission resource for transmitting the second information may include a resource corresponding to one or more of a physical uplink control channel (PUCCH), a physical uplink shared channel (PUSCH), a physical downlink control channel (PDCCH), and a physical downlink shared channel (PDSCH). In addition, when the first communication device and the second communication device are both terminal devices, the transmission resource for transmitting the second information may be a sidelink transmission resource. For example, the transmission resource for transmitting the second information may include a resource corresponding to a physical sidelink shared channel (PSSCH) and/or a physical sidelink control channel (PSCCH).

It should be noted that the method for determining whether to send the second information provided above may be implemented in combination or may be implemented separately. For example, in a case that the third information indicates that the first communication device is able to send the second information, the first communication device may determine whether the actual delivery time of the first data packet is within the first time period. If the actual delivery time of the first data packet is within the first time period and the transmission resource corresponding to the second information is obtained, the first communication device is able to transmit the second information. For example, if the first communication device does not send the second information within the time period [T₃-threshold1, T₃] and is able to send the second information before (T₃-threshold1), the first communication device may send the second information before (T₃-threshold1) but cannot send the second information because there is no transmission resource all the time. If there is no transmission resource until the time (T₃-threshold1), the first communication device may cancel the sending of the second information, i.e., no longer indicate the delivery situation of the first data packet to the second communication device.

It should be noted that, for the delivery of the first data packet by the first communication device may be specified by a protocol or may be configured by the second communication device. If the delivery is configured by the second communication device, the configuration may be implemented based on one or more of a radio resource control (RRC) message, a PDCP control PDU, a MAC CE, DCI, etc.

The method embodiments of the present disclosure are described in detail above, and the apparatus embodiments of the present disclosure are described in detail below with reference to the accompanying drawings. It should be understood that descriptions of the method embodiments correspond to descriptions of the apparatus embodiments, and therefore, reference may be made to the foregoing method embodiments for parts that are not described in detail.

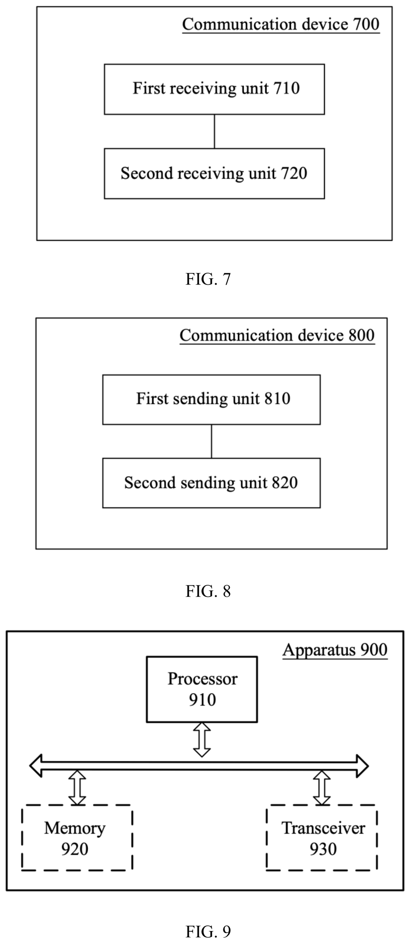

FIG. 7 is a schematic structural diagram of a communication device 700 according to an embodiment of the present disclosure. The communication device 700 is a first communication device. The communication device 700 may include a first receiving unit 710 and a second receiving unit 720.

The first receiving unit 710 is configured to receive first information sent by a second communication device, where the first information is used to indicate a first time, and the first time is a reference delivery time of a first data packet.

The second receiving unit 720 is configured to receive the first data packet.

In some embodiments, the first communication device is a terminal device, the second communication device is an access network device, and the first time is determined based on one or more of: a packet delay budget (PDB) of a traffic flow corresponding to the first data packet; a second time, where the second time is a time at which the access network device receives the first data packet from a user plane function (UPF); and a first duration, where the first duration is a duration required by the first data packet to be transmitted from the UPF to the access network device.

In some embodiments, the first time is determined based on the following formula: T₁+(T_{PDB}-N3_fix), where T₁ represents the second time, T_{PDB} represents a duration corresponding to the PDB, and N3_fix represents the first duration.

In some embodiments, the first time is represented by an identifier of the time unit and/or an absolute time.

In some embodiments, the first information is carried in one or more of downlink control information (DCI), a media access control control element (MAC CE), a control data packet, and a MAC header.

In some embodiments, the first information includes a second duration, the second duration is used to indicate a duration between a receiving time of the first information and the first time, and the communication device is further configured to determine the first time based on the second duration.

In some embodiments, when the first data packet is transmitted through a plurality of transport blocks (TB), the first information is included in part or all of the plurality of TBs.

In some embodiments, the communication device 700 is further configured to deliver the first data packet at the first time or before the first time.

In some embodiments, the first data packet belongs to a first data packet set, and the first time is a reference delivery time of the first data packet set.

In some embodiments, the communication device 700 is further configured to deliver, by the first communication device, the first data packet set at the first time or before the first time.

In some embodiments, delivering the first data packet set includes: delivering the first data packet set in response to the first communication device receiving all data packets in the first data packet set.

In some embodiments, delivering the first data packet set includes: delivering the first data packet set when a first condition is met.

In some embodiments, the first condition includes one or more of: a previous data packet set of the first data packet set having been delivered; a time at which the first data packet set is delivered being later than a fourth time, where the fourth time is a reference delivery time of the previous data packet set; and a data packet set corresponding to a first traffic flow having been delivered, where the first traffic flow has a multi-modality relationship with a traffic flow corresponding to the first data packet set.

In some embodiments, the communication device 700 is further configured to: at the first time, if the first communication device does not receive all the data packets in the first data packet set, perform one or both of: discarding part or all of the data packets in the first data packet set; and delivering part or all of the data packets that have been received in the first data packet set.

In some embodiments, the first data packet set is a PDU set.

In some embodiments, the communication device is further configured to trigger second information to the second communication device, where the second information is used to indicate an actual delivery situation of the first data packet set.

In some embodiments, the second information is used to indicate one or more of: an actual delivery time of the first data packet; whether the first data packet has been delivered; and a time difference between the actual delivery time of the first data packet and the first time.

In some embodiments, sending the second information to the second communication device includes: triggering the second information when the first communication device needs to trigger the second information, where whether the second information needs to be triggered is determined based on the actual delivery time of the first data packet.

In some embodiments, if the actual delivery time is within a first time period, the first communication device is able to trigger the second information; and/or, if the actual delivery time is within a second time period, the first communication device is unable to trigger the second information.

In some embodiments, the first time period is a time period earlier than the first time, and/or the second time period includes the first time.

In some embodiments, the communication device 700 is further configured to receive third information sent by the second communication device, where the third information is used to indicate whether the first communication device needs to trigger the second information.

In some embodiments, the first information and the third information are carried in a same message.

In some embodiments, in a case that when the second information is used to indicate the actual delivery time, the actual delivery time is represented by an identifier of the time unit and/or an absolute time.

In some embodiments, the time unit includes one or more of a radio frame, a subframe, a slot, and an orthogonal frequency division multiplexing (OFDM) symbol.

In some embodiments, triggering the second information to the second communication device includes: sending the second information on a transmission resource when the first communication device obtains the transmission resource.

In some embodiments, the transmission resource includes a resource corresponding to one or more of a physical uplink control channel (PUCCH), a physical uplink shared channel (PUSCH), a physical downlink control channel (PDCCH), and a physical downlink shared channel (PDSCH).

In some embodiments, the first communication device is a terminal device, and the first time is a latest time at which the terminal device delivers the first data packet to an upper layer; or the first communication device is an access network device, and the first time is a latest time at which the access network device delivers the first data packet to the UPF.

FIG. 8 is a schematic structural diagram of another communication device 800 according to an embodiment of the present disclosure. The communication device 800 may be a second communication device. The communication device 800 includes a first sending unit 810 and a second sending unit 820.

The first sending unit 810 is configured to send first information to a first communication device, where the first information is used to indicate a first time, and the first time is a reference delivery time of a first data packet.

The second sending unit 820 is configured to send the first data packet.

In some embodiments, the first communication device is a terminal device, the second communication device is an access network device, and the first time is determined based on one or more of: a packet delay budget (PDB) of a traffic flow corresponding to the first data packet; a second time, where the second time is a time at which the access network device receives the first data packet from a user plane function (UPF); and a first duration, where the first duration is a duration required by the first data packet to be transmitted from the UPF to the access network device.

In some embodiments, the first time is determined based on the following formula: T₁+(T_{PDB}-N3_fix), where T₁ represents the second time, T_{PDB} represents a duration corresponding to the PDB, and N3_fix represents the first duration.

In some embodiments, the first time is represented by an identifier of the time unit and/or an absolute time.

In some embodiments, the first information is carried in one or more of downlink control information (DCI), a media access control control element (MAC CE), a control data packet, and a MAC header.

In some embodiments, the first information includes a second duration, and the second duration is used to indicate a duration between a receiving time of the first information and the first time.

In some embodiments, when the first data packet is transmitted through a plurality of transport blocks (TB), the first information is included in part or all of the plurality of TBs.

In some embodiments, the communication device 800 is further configured to receive second information sent by the first communication device, where the second information is used to indicate an actual delivery situation of the first data packet.

In some embodiments, the second information is used to indicate one or more of: an actual delivery time of the first data packet; whether the first data packet has been delivered; and a time difference between the actual delivery time of the first data packet and the first time.

In some embodiments, receiving the second information sent by the first communication device includes: receiving the second information when the first communication device needs to trigger the second information, where whether the second information needs to be triggered is determined based on the actual delivery time of the first data packet.

In some embodiments, if the actual delivery time is within a first time period, the first communication device is able to trigger the second information; and/or, if the actual delivery time is within a second time period, the first communication device is unable to trigger the second information.

In some embodiments, the first time period is a time period earlier than the first time, and/or the second time period includes the first time.

In some embodiments, the communication device 800 is further configured to send third information to the first communication device, where the third information is used to indicate whether the first communication device needs to trigger the second information.

In some embodiments, the first information and the third information are carried in a same message.

In some embodiments, when the second information is used to indicate the actual delivery time, the actual delivery time is represented by an identifier of the time unit and/or an absolute time.

In some embodiments, the time unit includes one or more of a radio frame, a subframe, a slot, and an orthogonal frequency division multiplexing (OFDM) symbol.

In some embodiments, receiving the second information sent by the first communication device includes: receiving the second information on a transmission resource when the first communication device obtains the transmission resource.

In some embodiments, the transmission resource includes a resource corresponding to one or more of a physical uplink control channel (PUCCH), a physical uplink shared channel (PUSCH), a physical downlink control channel (PDCCH), and a physical downlink shared channel (PDSCH).

In some embodiments, the first communication device is a terminal device, and the first time is a latest time at which the terminal device delivers the first data packet to an upper layer; or the first communication device is an access network device, and the first time is a latest time at which the access network device delivers the first data packet to the UPF.

In some embodiments, the first data packet belongs to a first data packet set, and the first time is a reference delivery time of the first data packet set.

In some embodiments, the first data packet set is a PDU set.

In an alternative embodiment, the first receiving unit 710, the second receiving unit 720, the first sending unit 810, or the second sending unit 820 may be a transceiver 930. The communication device 700, or the communication device 800 may further include a processor 910 and a memory 920, as shown in FIG. 9.

FIG. 9 is a schematic structural diagram of an apparatus for communication according to an embodiment of the present disclosure. The dashed line in FIG. 9 indicates that the unit or module is optional. The apparatus 900 may be configured to implement the method described in the foregoing method embodiments. The apparatus 900 may be one or more of a chip, a terminal device, or a network device.

The apparatus 900 may include one or more processors 910, and the processor 910 may support the apparatus 900 to implement the method described in the foregoing method embodiments. The processor 910 may be a general-purpose processor or a dedicated processor. For example, the processor may be a central processing unit (CPU). Alternatively, the processor may be another general-purpose processor, a digital signal processor (DSP), an application specific integrated circuit (ASIC), a field programmable gate array (FPGA) or other programmable logic devices, a discrete gate or transistor logic device, a discrete hardware component, or the like. The general-purpose processor may be a microprocessor, or the processor may be any conventional processor or the like.

The apparatus 900 may further include one or more memories 920 storing a program, and the program may be executed by the processor 910 to cause the processor 910 to perform the method described in the foregoing method embodiments. The memory 920 may be independent of the processor 910 or may be integrated into the processor 910.

The apparatus 900 may further include a transceiver 930, and the processor 910 may communicate with another device or chip via the transceiver 930. For example, the processor 910 may perform data transceiving with another device or chip via the transceiver 930.

Embodiments of the present disclosure further provide a computer-readable storage medium, configured to store a program. The computer-readable storage medium may be applied to the terminal or network device provided in the embodiments of the present disclosure, and the program causes the computer to perform the method performed by the terminal or network device in the embodiments of the present disclosure.

Embodiments of the present disclosure further provide a computer program product. The computer program product includes a program. The computer program product may be applied to the terminal or network device provided in the embodiments of the present disclosure, and the program causes the computer to perform the method performed by the terminal or network device in the embodiments of the present disclosure.

Embodiments of the present disclosure further provide a computer program. The computer program may be applied to the terminal or network device provided in the embodiments of the present disclosure, and the computer program causes the computer to perform the method performed by the terminal or network device in the embodiments of the present disclosure.

It should be understood that the terms "system" and "network" may be used interchangeably in the present disclosure. In addition, the terms used in the present disclosure are intended only to explain specific embodiments of the present disclosure and are not intended to limit the present disclosure. The terms "first", "second", "third" and "fourth" in the description and claims as well as the accompanying drawings of the present disclosure are used to distinguish between different objects and not to describe a particular order. Furthermore, the terms "including" and "having", and any variation thereof, are intended to cover non-exclusive inclusion.

In the embodiments of the present disclosure, the term "indication" mentioned in the embodiments of the present disclosure may be a direct indication, or may be an indirect indication, or may indicate that there is an association relationship. For example, A indicates B, which may indicate that A directly indicates B, e.g., B is obtained through A, or may indicate that A indirectly indicates B, e.g., A indicates C and B is obtained through C, or may indicate that A and B have an association relationship.

In the embodiments of the present disclosure, "B corresponding to A" indicates that B is associated with A, and B may be determined based on A. However, it should be further understood that, determining B based on A does not mean that B is determined only based on A, or B may also be determined based on A and/or other information.

In the embodiments of the present disclosure, the term "corresponding" in the embodiments of the present disclosure may indicate that there is a direct correspondence or indirect correspondence between the two, or may indicate that there is an association relationship between the two, or may be relationships such as indicating and being indicated, configuring and being configured, etc.

In the embodiments of the present disclosure, the terms "predefined" and "preconfigured" may be implemented by pre-storing a corresponding code, a table, or another manner that can be used to indicate related information in a device (e.g., a terminal device and a network device), and a specific implementation is not limited in the present disclosure. For example, the predefined may indicate being defined in a protocol.

In the embodiments of the present disclosure, the term "protocol" in the embodiments of the present disclosure may refer to a standard protocol in the field of communications, such as an LTE protocol, an NR protocol, and related protocols applied to a future communications system, which is not limited in the present disclosure.

In the embodiments of the present disclosure, the term "and/or" in this specification is merely an association relationship for describing associated objects, indicating that there are three relationships, e.g., A and/or B may indicate that A exists alone, A and B exist at the same time, and B exists alone. In addition, the character "/" in this specification generally indicates an "or" relationship between the associated objects.

In the embodiments of the present disclosure, in various embodiments of the present disclosure, a size of a sequence number of each process does not mean an execution sequence, and the execution sequence of each process should be determined by its function and internal logic but should not constitute any limitation on an implementation process of the embodiments of the present disclosure.

In the several embodiments provided in the present disclosure, it should be understood that the disclosed system, apparatus, and method may be implemented in other manners. For example, the apparatus embodiments described above are merely illustrative, and the division of the units is merely a logical function division. In actual implementation, there may be alternative division manners, such as combining a plurality of units or components or integrating them into another system, or ignoring or not executing some features. In addition, the shown or discussed mutual coupling or direct coupling or communication connection may be indirect coupling or communication connection through some interfaces, devices, or units, which may be electrical, mechanical, or in other forms.

The units described as separate parts may or may not be physically separate, and parts shown as units may or may not be physical units, i.e., may be located in one position, or may be distributed on a plurality of network units. Some or all of the units may be selected according to actual needs to achieve the objectives of the solutions of the embodiments.

In addition, functional units in the embodiments of the present disclosure may be integrated into one processing unit, or each of the units may exist alone physically, or two or more units are integrated into one unit.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to the embodiments of the present disclosure are all or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium, for example, the computer instructions may be transmitted from a website, a computer, a server, or a data center to another website, computer, server, or data center in a wired (e.g., a coaxial cable, an optical fiber, a digital subscriber line (DSL)) or a wireless (e.g., infrared, wireless, microwave, etc.) manner. The computer-readable storage medium may be any usable medium readable by a computer, or a data storage device, such as a server or a data center including one or more integrated usable media. The usable medium may be a magnetic medium (e.g., a floppy disk, a hard disk, or a magnetic tape), an optical medium (e.g., a digital video disk (DVD)), a semiconductor medium (e.g., a solid state disk (SSD)), or the like.

The foregoing descriptions are merely specific implementations of the present disclosure, but the protection scope of the present disclosure is not limited thereto, and any changes or substitutions may be easily conceived of by a person skilled in the art within the technical scope disclosed in the present disclosure. Therefore, the protection scope of the present disclosure shall be subject to the protection scope of the claims.

## Claims

1. A method for communication, comprising:
receiving, by a first communication device, first information sent by a second communication device, wherein the first information is used to indicate a first time, and the first time is a reference delivery time of a first data packet; and
receiving, by the first communication device, the first data packet.

2. The method according to claim 1, wherein the first communication device is a terminal device, the second communication device is an access network device, and the first time is determined based on one or more of:
a packet delay budget, PDB, of a traffic flow corresponding to the first data packet;
a second time, wherein the second time is a time at which the access network device receives the first data packet from a user plane function, UPF; and
a first duration, wherein the first duration is a duration required by the first data packet to be transmitted from the UPF to the access network device.

3. The method according to claim 2, wherein the first time is determined based on the following formula: T₁+(T_{PDB}-N3_fix), wherein T₁ represents the second time, T_{PDB} represents a duration corresponding to the PDB, and N3_fix represents the first duration.

4. The method according to any one of claims 1 to 3, wherein the first time is represented by one or both of an identifier of a time unit and an absolute time.

5. The method according to any one of claims 1 to 4, wherein the first information is carried in one or more of downlink control information, DCI, a media access control control element, MAC CE, a control data packet, and a MAC header.

6. The method according to any one of claims 1 to 5, wherein the first information includes a second duration, and the second duration is used to indicate a duration between a receiving time of the first information and the first time; and
wherein the method further includes:
determining, by the first communication device, the first time based on the second duration.

7. The method according to any one of claims 1 to 6, wherein the first information is included in part or all of a plurality of transport blocks, TB, when the first data packet is transmitted through the plurality of TBs.

8. The method according to any one of claims 1 to 7, further comprising:
delivering, by the first communication device, the first data packet at the first time or before the first time.

9. The method according to any one of claims 1 to 8, wherein the first data packet belongs to a first data packet set, and the first time is a reference delivery time of the first data packet set.

10. The method according to claim 9, further comprising:
delivering, by the first communication device, the first data packet set at the first time or before the first time.

11. The method according to claim 10, wherein the first communication device delivering the first data packet set includes:
in response to the first communication device receiving all data packets in the first data packet set, the first communication device delivering the first data packet set.

12. The method according to claim 10 or claim 11, wherein the first communication device delivering the first data packet set includes:
the first communication device delivering the first data packet set when a first condition is met.

13. The method according to claim 12, wherein the first condition includes one or more of:
a previous data packet set of the first data packet set having been delivered;
a time at which the first data packet set is delivered being later than a fourth time, wherein the fourth time is a reference delivery time of the previous data packet set; and
a data packet set corresponding to a first traffic flow having been delivered, wherein the first traffic flow has a multi-modality relationship with a traffic flow corresponding to the first data packet set.

14. The method according to any one of claims 9 to 11, further comprising:
at the first time, if the first communication device does not receive all the data packets in the first data packet set, the first communication device performing one or both of:
discarding part or all of the data packets in the first data packet set; and
delivering part or all of the data packets that have been received in the first data packet set.

15. The method according to any one of claims 9 to 14, wherein the first data packet set is a protocol data unit, PDU, set.

16. The method according to any one of claims 1 to 15, further comprising:
triggering, by the first communication device, second information to the second communication device, wherein the second information is used to indicate an actual delivery situation of the first data packet set.

17. The method according to claim 16, wherein the second information is used to indicate one or more of:
an actual delivery time of the first data packet;
whether the first data packet has been delivered; and
a time difference between the actual delivery time of the first data packet and the first time.

18. The method according to claim 16 or claim 17, wherein the first communication device triggering the second information to the second communication device includes:
the first communication device triggering the second information when the first communication device needs to trigger the second information, wherein whether the second information needs to be triggered is determined based on the actual delivery time of the first data packet.

19. The method according to claim 18, wherein:
if the actual delivery time is within a first time period, the first communication device is able to trigger the second information; and/or,
if the actual delivery time is within a second time period, the first communication device is unable to trigger the second information.

20. The method according to claim 19, wherein the first time period is a time period earlier than the first time, and/or the second time period includes the first time.

21. The method according to any one of claims 16 to 20, further comprising:
receiving, by the first communication device, third information sent by the second communication device, wherein the third information is used to indicate whether the first communication device needs to trigger the second information.

22. The method according to claim 21, wherein the first information and the third information are carried in a same message.

23. The method according to any one of claims 16 to 22, wherein the actual delivery time is represented by one or both of an identifier of a time unit and an absolute time when the second information is used to indicate the actual delivery time.

24. The method according to claim 4 or claim 23, wherein the time unit includes one or more of a radio frame, a subframe, a slot, and an orthogonal frequency division multiplexing, OFDM, symbol.

25. The method according to any one of claims 16 to 24, wherein the first communication device triggering the second information to the second communication device includes:
the first communication device sending the second information on a transmission resource when the first communication device obtains the transmission resource.

26. The method according to claim 25, wherein the transmission resource includes a resource corresponding to one or more of a physical uplink control channel, PUCCH, a physical uplink shared channel, PUSCH, a physical downlink control channel, PDCCH, and a physical downlink shared channel, PDSCH.

27. The method according to any one of claims 1 to 26, wherein:
the first communication device is a terminal device, and the first time is a latest time at which the terminal device delivers the first data packet to an upper layer; or,
the first communication device is an access network device, and the first time is a latest time at which the access network device delivers the first data packet to the UPF.

28. A method for communication, comprising:
sending, by a second communication device, first information to a first communication device, wherein the first information is used to indicate a first time, and the first time is a reference delivery time of a first data packet; and
sending, by the second communication device, the first data packet.

29. The method according to claim 28, wherein the first communication device is a terminal device, the second communication device is an access network device, and the first time is determined based on one or more of:
a packet delay budget, PDB, of a traffic flow corresponding to the first data packet;
a second time, wherein the second time is a time at which the access network device receives the first data packet from a user plane function, UPF; and
a first duration, wherein the first duration is a duration required by the first data packet to be transmitted from the UPF to the access network device.

30. The method according to claim 29, wherein the first time is determined based on the following formula: T₁+(T_{PDB}-N3_fix), wherein T₁ represents the second time, T_{PDB} represents a duration corresponding to the PDB, and N3_fix represents the first duration.

31. The method according to any one of claims 28 to 30, wherein the first time is represented by one or both of an identifier of a time unit and an absolute time.

32. The method according to any one of claims 28 to 31, wherein the first information is carried in one or more of downlink control information, DCI, a media access control control element, MAC CE, a control data packet, and a MAC header.

33. The method according to any one of claims 28 to 32, wherein the first information includes a second duration, and the second duration is used to indicate a duration between a receiving time of the first information and the first time.

34. The method according to any one of claims 28 to 33, wherein the first information is included in part or all of a plurality of transport blocks, TB, when the first data packet is transmitted through the plurality of TBs.

35. The method according to any one of claims 28 to 34, further comprising:
receiving, by the second communication device, second information sent by the first communication device, wherein the second information is used to indicate an actual delivery situation of the first data packet.

36. The method according to claim 35, wherein the second information is used to indicate one or more of:
an actual delivery time of the first data packet;
whether the first data packet has been delivered; and
a time difference between the actual delivery time of the first data packet and the first time.

37. The method according to claim 35 or claim 36, wherein the second communication device receiving the second information sent by the first communication device includes:
the second communication device receives the second information when the first communication device needs to trigger the second information, wherein whether the second information needs to be triggered is determined based on the actual delivery time of the first data packet set.

38. The method according to claim 37, wherein:
if the actual delivery time is within a first time period, the first communication device is able to trigger the second information; and/or,
if the actual delivery time is within a second time period, the first communication device is unable to trigger the second information.

39. The method according to claim 38, wherein the first time period is a time period earlier than the first time, and/or the second time period includes the first time.

40. The method according to any one of claims 35 to 39, further comprising:
sending, by the second communication device, third information to the first communication device, wherein the third information is used to indicate whether the first communication device needs to trigger the second information.

41. The method according to claim 40, wherein the first information and the third information are carried in a same message.

42. The method according to any one of claims 35 to 41, wherein the actual delivery time is represented by one or both of an identifier of a time unit and an absolute time when the second information is used to indicate the actual delivery time.

43. The method according to claim 31 or claim 42, wherein the time unit includes one or more of a radio frame, a subframe, a slot, and an orthogonal frequency division multiplexing, OFDM, symbol.

44. The method according to any one of claims 35 to 43, wherein the second communication device receiving the second information sent by the first communication device includes:
the second communication device receiving the second information on a transmission resource when the first communication device obtains the transmission resource.

45. The method according to claim 44, wherein the transmission resource includes a resource corresponding to one or more of a physical uplink control channel, PUCCH, a physical uplink shared channel, PUSCH, a physical downlink control channel, PDCCH, and a physical downlink shared channel, PDSCH.

46. The method according to any one of claims 28 to 45, wherein:
the first communication device is a terminal device, and the first time is a latest time at which the terminal device delivers the first data packet to an upper layer; or,
the first communication device is an access network device, and the first time is a latest time at which the access network device delivers the first data packet to the UPF.

47. The method according to any one of claims 28 to 46, wherein the first data packet belongs to a first data packet set, and the first time is a reference delivery time of the first data packet set.

48. The method according to claim 47, wherein the first data packet set is a protocol data unit, PDU, set.

49. A communication device, wherein the communication device is a first communication device, comprising:
a first receiving unit, configured to receive first information sent by a second communication device, wherein the first information is used to indicate a first time, and the first time is a reference delivery time of a first data packet; and
a second receiving unit, configured to receive the first data packet.

50. The communication device according to claim 49, wherein the first communication device is a terminal device, the second communication device is an access network device, and the first time is determined based on one or more of:
a packet delay budget, PDB, of a traffic flow corresponding to the first data packet;
a second time, wherein the second time is a time at which the access network device receives the first data packet from a user plane function, UPF; and
a first duration, wherein the first duration is a duration required by the first data packet to be transmitted from the UPF to the access network device.

51. The communication device according to claim 50, wherein the first time is determined based on the following formula: T₁+(T_{PDB}-N3_fix), wherein T₁ represents the second time, T_{PDB} represents a duration corresponding to the PDB, and N3_fix represents the first duration.

52. The communication device according to any one of claims 49 to 51, wherein the first time is represented by one or both of an identifier of a time unit and an absolute time.

53. The communication device according to any one of claims 49 to 52, wherein the first information is carried in one or more of downlink control information, DCI, a media access control control element, MAC CE, a control data packet, and a MAC header.

54. The communication device according to any one of claims 49 to 53, wherein the first information includes a second duration, and the second duration is used to a duration between a receiving time of the first information and the first time; and
wherein the communication device is further configured to:
determine the first time based on the second duration.

55. The communication device according to any one of claims 49 to 54, wherein the first information is included in part or all of a plurality of transport blocks, TB, when the first data packet is transmitted through the plurality of TBs.

56. The communication device according to any one of claims 49 to 55, wherein the communication device is further configured to:
deliver the first data packet at the first time or before the first time.

57. The communication device according to any one of claims 49 to 56, wherein the first data packet belongs to a first data packet set, and the first time is a reference delivery time of the first data packet set.

58. The communication device according to claim 57, wherein the communication device is further configured to:
deliver, by the first communication device, the first data packet set at the first time or before the first time.

59. The communication device according to claim 58, wherein delivering the first data packet set includes:
delivering the first data packet set in response to the first communication device receiving all data packets in the first data packet set.

60. The communication device according to claim 58 or claim 59, wherein delivering the first data packet set includes:
delivering the first data packet set when a first condition is met.

61. The communication device according to claim 60, wherein the first condition includes one or more of:
a previous data packet set of the first data packet set having been delivered;
a time at which the first data packet set is delivered being later than a fourth time, wherein the fourth time is a reference delivery time of the previous data packet set; and
a data packet set corresponding to a first traffic flow having been delivered, wherein the first traffic flow has a multi-modality relationship with a traffic flow corresponding to the first data packet set.

62. The communication device according to any one of claims 58 to 61, wherein the communication device is further configured to:
at the first time, if the first communication device does not receive all the data packets in the first data packet set, perform one or both of:
discarding part or all of the data packets in the first data packet set; and
delivering part or all of the data packets that have been received in the first data packet set.

63. The communication device according to any one of claims 57 to 62, wherein the first data packet set is a protocol data unit, PDU, set.

64. The communication device according to any one of claims 49 to 63, wherein the communication device is further configured to:
trigger second information to the second communication device, wherein the second information is used to indicate an actual delivery situation of the first data packet set.

65. The communication device according to claim 64, wherein the second information is used to indicate one or more of:
an actual delivery time of the first data packet;
whether the first data packet has been delivered; and
a time difference between the actual delivery time of the first data packet and the first time.

66. The communication device according to claim 64 or claim 65, wherein sending the second information to the second communication device includes:
triggering the second information when the first communication device needs to trigger the second information, wherein whether the second information needs to be triggered is determined based on the actual delivery time of the first data packet.

67. The communication device of claim 66, wherein:
if the actual delivery time is within a first time period, the first communication device is able to trigger the second information; and/or,
if the actual delivery time is within a second time period, the first communication device is unable to trigger the second information.

68. The communication device according to claim 67, wherein the first time period is a time period earlier than the first time, and/or the second time period includes the first time.

69. The communication device according to any one of claims 64 to 68, wherein the communication device is further configured to:
receive third information sent by the second communication device, wherein the third information is used to indicate whether the first communication device needs to trigger the second information.

70. The communication device according to claim 69, wherein the first information and the third information are carried in a same message.

71. The communication device according to any one of claims 64 to 70, wherein the actual delivery time is represented by one or both of an identifier of a time unit and an absolute time when the second information is used to indicate the actual delivery time.

72. The communication device according to claim 52 or claim 71, wherein the time unit includes one or more of a radio frame, a subframe, a slot, and an orthogonal frequency division multiplexing, OFDM, symbol.

73. The communication device according to any one of claims 64 to 72, wherein triggering the second information to the second communication device includes:
sending the second information on a transmission resource when the first communication device obtains the transmission resource.

74. The communication device according to claim 73, wherein the transmission resource includes a resource corresponding to one or more of a physical uplink control channel, PUCCH, a physical uplink shared channel, PUSCH, a physical downlink control channel, PDCCH, and a physical downlink shared channel, PDSCH.

75. The communication device according to any one of claims 49 to 74, wherein:
the first communication device is a terminal device, and the first time is a latest time at which the terminal device delivers the first data packet to an upper layer; or,
the first communication device is an access network device, and the first time is a latest time at which the access network device delivers the first data packet to the UPF.

76. A communication device, wherein the communication device is a second communication device, comprising:
a first sending unit, configured to send first information to a first communication device, wherein the first information is used to indicate a first time, and the first time is a reference delivery time of a first data packet; and
a second sending unit, configured to send the first data packet.

77. The communication device according to claim 76, wherein the first communication device is a terminal device, the second communication device is an access network device, and the first time is determined based on one or more of:
a packet delay budget, PDB, of a traffic flow corresponding to the first data packet;
a second time, wherein the second time is a time at which the access network device receives the first data packet from a user plane function, UPF; and
a first duration, wherein the first duration is a duration required by the first data packet to be transmitted from the UPF to the access network device.

78. The communication device according to claim 77, wherein the first time is determined based on the following formula: T₁+(T_{PDB}-N3_fix), wherein T₁ represents the second time, T_{PDB} represents a duration corresponding to the PDB, and N3_fix represents the first duration.

79. The communication device according to any one of claims 76 to 78, wherein the first time is represented by one or both of an identifier of a time unit and an absolute time.

80. The communication device according to any one of claims 76 to 79, wherein the first information is carried in one or more of downlink control information, DCI, a media access control control element, MAC CE, a control data packet, and a MAC header.

81. The communication device according to any one of claims 76 to 80, wherein the first information includes a second duration, and the second duration is used to indicate a duration between a receiving time of the first information and the first time.

82. The communication device according to any one of claims 76 to 81, wherein the first information is included in part or all of a plurality of transport blocks, TB, when the first data packet is transmitted through the plurality of TBs.

83. The communication device according to any one of claims 76 to 82, wherein the communication device is further configured to:
receive second information sent by the first communication device, wherein the second information is used to indicate an actual delivery situation of the first data packet.

84. The communication device according to claim 83, wherein the second information is used to indicate one or more of:
an actual delivery time of the first data packet;
whether the first data packet has been delivered; and
a time difference between the actual delivery time of the first data packet and the first time.

85. The communication device according to claim 83 or claim 84, wherein receiving the second information sent by the first communication device includes:
receiving the second information when the first communication device needs to trigger the second information, wherein whether the second information needs to be triggered is determined based on the actual delivery time of the first data packet.

86. The communication device according to claim 85, wherein:
if the actual delivery time is within a first time period, the first communication device is able to trigger the second information; and/or,
if the actual delivery time is within a second time period, the first communication device is unable to trigger the second information.

87. The communication device according to claim 86, wherein the first time period is a time period earlier than the first time, and/or the second time period includes the first time.

88. The communication device according to any one of claims 83 to 87, wherein the communication device is further configured to:
send third information to the first communication device, wherein the third information is used to indicate whether the first communication device needs to trigger the second information.

89. The communication device according to claim 88, wherein the first information and the third information are carried in a same message.

90. The communication device according to any one of claims 83 to 89, wherein the actual delivery time is represented by one or both of an identifier of a time unit and an absolute time when the second information is used to indicate the actual delivery time.

91. The communication device according to claim 79 or claim 90, wherein the time unit includes one or more of a radio frame, a subframe, a slot, and an orthogonal frequency division multiplexing, OFDM, symbol.

92. The communication device according to any one of claims 83 to 91, wherein receiving the second information sent by the first communication device includes:
receiving the second information on a transmission resource when the first communication device obtains the transmission resource.

93. The communication device according to claim 92, wherein the transmission resource includes a resource corresponding to one or more of a physical uplink control channel, PUCCH, a physical uplink shared channel, PUSCH, a physical downlink control channel, PDCCH, and a physical downlink shared channel, PDSCH.

94. The communication device according to any one of claims 76 to 93, wherein:
the first communication device is a terminal device, and the first time is a latest time at which the terminal device delivers the first data packet to an upper layer; or,
the first communication device is an access network device, and the first time is a latest time at which the access network device delivers the first data packet to the UPF.

95. The communication device according to any one of claims 76 to 94, wherein the first data packet belongs to a first data packet set, and the first time is a reference delivery time of the first data packet set.

96. The communication device according to claim 95, wherein the first data packet set is a protocol data unit, PDU, set.

97. A communication device, comprising a memory and a processor, wherein the memory is configured to store a program, and the processor is configured to invoke the program in the memory to cause the communication device to perform the method according to any one of claims 1 to 48.

98. An apparatus, comprising a processor configured to invoke a program from a memory to cause the apparatus to perform the method according to any one of claims 1 to 48.

99. A chip, comprising a processor configured to invoke a program from a memory to cause a device on which the chip is installed to perform the method according to any one of claims 1 to 48.

100. A computer-readable storage medium, storing a program, wherein the program causes a computer to perform the method according to any one of claims 1 to 48.

101. A computer program product, comprising a program, wherein the program causes a computer to perform the method according to any one of claims 1 to 48.

102. A computer program, wherein the computer program causes a computer to perform the method according to any one of claims 1 to 48.
